# EUROPEAN PATENT SPECIFICATION

(11) **EP 4 070 053 B1**
(45) Date of publication and mention of the grant of the patent: **30.08.2023**
(21) Application number: 20827987.7
(22) Date of filing: 02.12.2020
(51) Int. Cl.: G01J 3/02, G01N 21/25, G01J 3/52, G01J 3/50, G01J 3/42, G01J 3/36, G01J 3/32, G01J 3/28, G01J 3/10, G01N 21/47, G01N 21/55

(54) **COLOUR MEASUREMENT**
FARBMESSUNG
MESURE DE COULEUR

(30) Priority: 03.12.2019 US 201962943038 P
(43) Date of publication of application: 12.10.2022
(73) Proprietor: ams Sensors Germany GmbH, 07745 Jena (DE)
(72) Inventor: SIESS, Gunter, 5656 AE Eindhoven (NL)
(74) Representative: Ding, Yuan
(86) International application number: PCT/EP2020/084302
(87) International publication number: WO 2021/110759

(56) References cited:
- US-A1- 2014 340 707
- US-B1- 7 221 437
- ANDREW GARDNER ET AL: "Linear light source reflectometry", ACM TRANSACTIONS ON GRAPHICS, ACM, NY, US, vol. 22, no. 3, 1 July 2003 (2003-07-01), pages 749-758, XP058249584, ISSN: 0730-0301, DOI: 10.1145/882262.882342

## Description

### Technical Field of the Disclosure

This specification relates to methods and systems for measuring the color of a surface.

### Background of the Disclosure

In general, the color of a surface is measured by measuring the light reflected from the surface over a number of bands, and transforming these measurements into a "color space". A color space is a model which assigns colors to a framework for ease of reference. Color spaces may assign specific names and numbers to each color (e.g. the Pantone^{™} collection), or they may plot colors in a (usually 3-dimensional) phase space, such as the RGB space commonly used for computer displays, or the CIE color space.

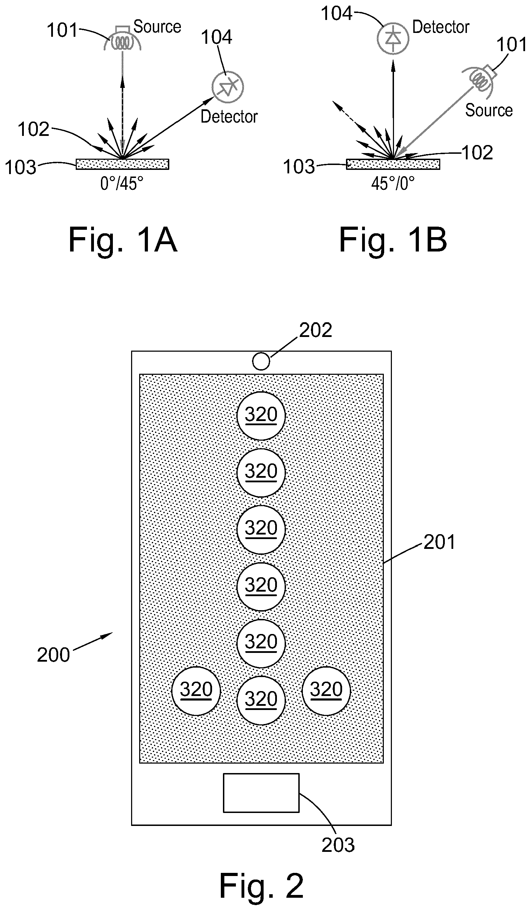

Standards for color measurement define that the measurement should be taken in one of two geometries - 0°/45°, as shown in Figure 1A or 45°/0°, as shown in Figure 1B. In each case, a light source 101 illuminates a point 102 on a surface 103, and the reflection from the point 102 is received by a detector 104. The first number indicates the angle between a first line perpendicular to the surface and passing through the point 102, and a second line connecting the light source 101 and the point 102 (relative to a direction perpendicular to the surface). The second number indicates the angle between the first line and a third line connecting the point 102 to the detector 104. In practical examples, the source 101 may not be a point source, the "point" 102 may be more spread out, and the detector 104 may also detect light reflected from a region around the point 102.

This measurement geometry is chosen to maximize the diffuse reflection of light from the light source to the detector, and to ensure that there are no contributions to the signal from specular reflection.

For the measurement of reflectance, a symmetrical geometry is used, such that the specular reflection of the light source from the surface is picked up by the detector. In addition, the ratio of intensity of the diffuse and specular reflection is important, so that the reflectance can be determined accurately. Where "reflectance" is used herein, it specifically means "specular reflectance". The "reflectance" of a surface as used herein is the radiant flux received from the target divided by the radiant flux applied to the target. Reflectance may also be defined in terms of radiance, and the transformation between these definitions is well known. Devices for measuring reflection are described in US 2014/340707, US 7 221 437 and ANDREW GARDNER ET AL: "Linear light source reflectometry",ACM TRANSACTIONS ON GRAPHICS, XP058249584.

Known color and reflectance measurement devices generally have one or more fixed light sources and one or more fixed detectors, and some means of ensuring that the light sources and detectors are at the correct distance from a surface. This requires contact with the surface, which may not always be possible - but without such contact it is difficult to ensure that the proper measurement geometry is maintained.

It is therefore an aim of the present disclosure to provide colour and/or reflectance measurement methods and devices that address one or more of the problems above or at least provides a useful alternative.

### Summary

This specification relates to methods and devices for measuring the color of a surface, and also to measurements of reflectance.

According to a first aspect, there is provided a method of measuring the color of a surface. A device is positioned above the surface. The device comprises an optical sensor and a display screen. The optical sensor measures visible light level in a plurality of spectral channels, each channel having different spectral sensitivity characteristics. The device is positioned such that the sensor measures light reflected from the surface. A plurality of patterns are sequentially displayed on the display screen, each pattern comprising an illuminated region at a different respective distance from the optical sensor. The optical sensor is used to measure light reflected by the surface during display of each pattern. A value is determined for the distance from the optical sensor to the illuminated region for a first local maximum of intensity of the measured light reflected by the surface by using a sensor angle, the first local maximum being a maximum of the diffuse reflection of the pattern. A location in a color space corresponding to a color of the surface or a reflectance spectrum of the surface is determined based on the visible light level in each spectral channel for the value of the distance corresponding to the first local maximum.

According to a second aspect, there is provided a method of measuring the color of a surface. A device is positioned above the surface. The device comprises an optical sensor and a display screen. The optical sensor measures visible light level. The device is positioned such that the sensor measures light reflected from the surface. A plurality of patterns is sequentially displayed on the display screen, each pattern comprising an illuminated region at a different respective distance from the optical sensor, wherein the plurality of patterns comprises at least two groups of patterns, the illuminated region of each group of patterns being displayed in a different color. The optical sensor is used to measure light reflected by the surface during display of each pattern. A value is determined for the distance from the optical sensor to the illuminated region for a first local maximum of intensity of the measured light reflected by the surface by using a sensor angle, the first local maximum being a maximum of the diffuse reflection of the pattern. A location in a color space corresponding to a color of the surface or a reflectance spectrum of the surface is determined based on the visible light level for each group of patterns for the value of the distance corresponding to the local maximum.

According to a third aspect, there is provided a system including a device and a controller. The device comprises an optical sensor and a display screen. The optical sensor measures visible light level in a plurality of spectral channels, each channel having different spectral sensitivity characteristics. The controller is configured to:
cause the display screen to sequentially display a plurality of patterns, each pattern comprising an illuminated region at a different respective distance from the sensor;
receive measurements from the optical sensor of light reflected by a surface during display of each pattern;
determine a value of the distance from the optical sensor to the illuminated region for a first local maximum of intensity of the measured light reflected by the surface by using a sensor angle, the first local maximum being a maximum of the diffuse reflection of the pattern;
determine a location in a color space corresponding to a color of the surface or a reflectance spectrum of the surface based on the visible light level in each spectral channel for the value of the distance corresponding to the first local maximum.

According to a fourth aspect, there is provided a computer program product. The computer program product is for use in a device comprising an optical sensor and a display screen wherein the optical sensor measures visible light level in a plurality of spectral channels, each channel having different spectral sensitivity characteristics. The computer program product comprises:
code for sequentially displaying a plurality of patterns on the display screen, each pattern comprising an illuminated region at a different respective distance from the sensor;
code for measuring, using the optical sensor, light reflected by a surface during display of each pattern;
code for determining the value of the distance from the optical sensor to the illuminated region for a first local maximum of intensity of the measured light reflected by the surface by using a sensor angle,
the first local maximum being a maximum of the diffuse reflection of the pattern;
code for determining a location in a color space corresponding to a color of the surface or a reflectance spectrum of the surface based on the visible light level in each spectral channel for the value of the distance corresponding to the first local maximum.

According to a fifth aspect, there is provided a system including a device and a controller. The device comprises an optical sensor and a display screen. The controller is configured to:
cause the display screen to sequentially display a plurality of patterns, each pattern comprising an illuminated region at a different respective distance from the sensor, wherein the plurality of patterns comprises at least two groups of patterns, the illuminated region of each group of patterns being displayed in a different color;
receive measurements from the optical sensor of light reflected by a surface during display of each pattern;
determine a value of the distance from the optical sensor to the illuminated region for a first local maximum of intensity of the measured light reflected by the surface by using a sensor angle, the first local maximum being a maximum of the diffuse reflection of the pattern;
determine a location in a color space corresponding to a color of the surface or a reflectance spectrum of the surface based on the visible light level for each group of patterns for the value of the distance corresponding to the first local maximum.

According to a sixth aspect, there is provided a computer program product. The computer program product is for use in a device comprising an optical sensor and a display. The computer program product comprises:
code for sequentially displaying a plurality of patterns on the display screen, each pattern comprising an illuminated region at a different respective distance from the sensor, wherein the plurality of patterns comprises at least two groups of patterns, the illuminated region of each group of patterns being displayed in a different color;
code for measuring, using the optical sensor, light reflected by a surface during display of each pattern;
code for determining the value of the distance from the optical sensor to the illuminated region for a first local maximum of intensity of the measured light reflected by the surface by using a sensor angle,
the first local maximum being a maximum of the diffuse reflection of the pattern;
code for determining a location in a color space corresponding to a color of the surface or a reflectance spectrum of the surface based on the visible light level for each group of patterns for the value of the distance corresponding to the first local maximum.

### Brief Description Of The Drawings

Some examples will now be described by way of example only and with reference to the accompanying drawings, in which:
Figures 1A and 1B illustrate measurement geometries for colour measurement;
Figure 2 shows a device for measuring color and/or reflectance in accordance with the present disclosure;
Figure 3 illustrates the use of the device of Figure 2;
Figure 4 is a flowchart of a method for measuring diffuse and/or specular reflection;
Figures 5A to 5E show example patterns displayed on the device of Figure 2;
Figures 6A to 6E are charts showing the light reflected during display of each pattern of
Figures 5A to 5E;

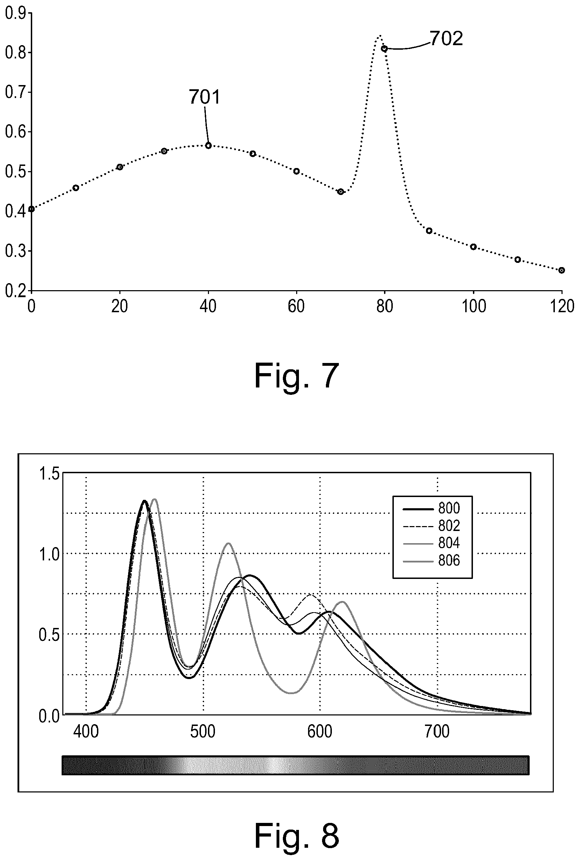

Figure 7 is a graph of measurements of light reflected from a surface;
Figure 8 is a graph showing the emission characteristics of various display screens;

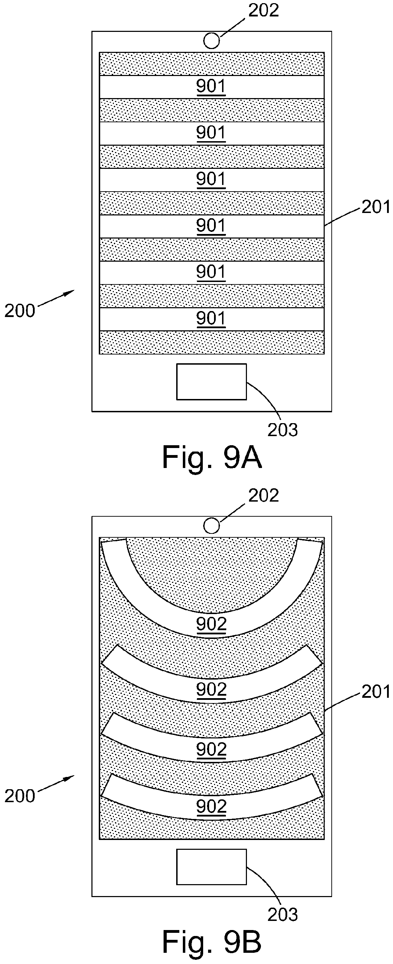

Figures 9A and 9B show devices displaying alternative patterns;

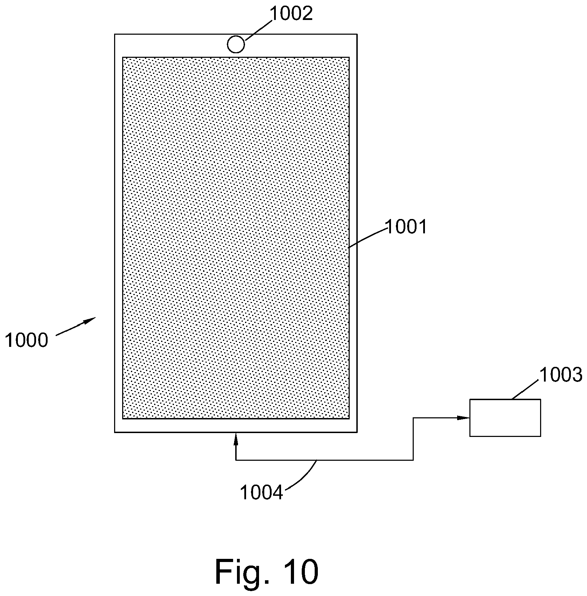

Figure 10 shows a system comprising an alternative device and an external controller.

In the figures like elements are indicated by like reference numerals.

### Detailed Description of the Preferred Embodiments

There is provided a method of colour and reflectance measurement using a device having a display screen and a detector. The measurement is obtained by showing patterns on the display screen at a plurality of distances from the detector, and then using those measurements to find the peaks in diffuse reflection (for colour measurement) and specular reflection (for reflectance measurement).

Some examples are given in the accompanying figures.

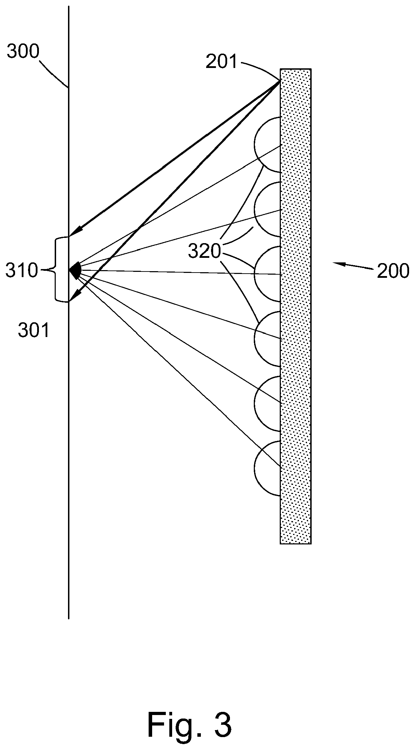

Figure 2 shows a device 200 having a display screen 201, an optical sensor 202, and a controller 203. Figure 3 illustrates the device 200 held parallel to a surface 300.

As shown in Figure 3, the sensor 202 has a field of view 310 which includes a "target spot" 301 on the surface 300. The target spot is defined so as to provide the required sensor angle when the device is held parallel to the surface. Its exact position will depend on the distance of the device from the surface, and the position of the device (i.e. it is a spot identified for convenience of description, rather than a point on the surface with special physical properties). The display screen 201 is positioned such that it illuminates the surface 300, including the target spot 301.

The display screen 201 can be of any type that emits light - e.g. an OLED screen or a backlit e-paper screen.

In general terms, the controller is configured to cause the display screen to display a plurality of patterns 320, one after the other (i.e. sequentially), where each pattern has an illuminated region at a different respective distance from the optical sensor (hereafter the "pattern distance"). The controller receives measurements from the optical sensor during display of each pattern (in particular, measurements of light reflected from the target spot 301 and the surrounding area), and uses these measurements to determine optical properties of the surface 300. The optical properties measured can include the diffuse reflection characteristics of the surface, the color of the surface, and/or the specular reflection characteristics of the surface.

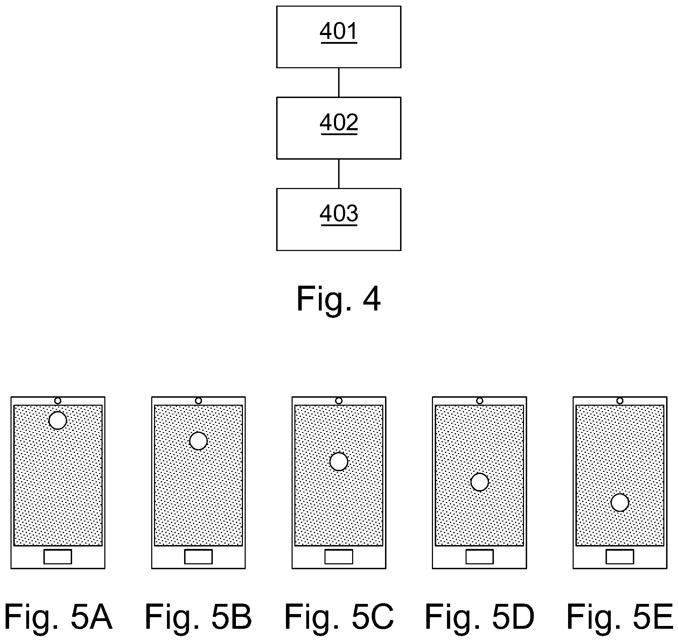

To explain the underlying principles, a method will first be described, with reference to Figure 4, for the measurement of diffuse and/or specular reflection characteristics generally (i.e. without considering the impact of color or wavelength specific properties).

In step 401, the device 200 is positioned relative to the surface 300, such that the display screen is substantially parallel to the surface, and the sensor measures light reflected from the surface.

In step 402, a plurality of patterns are sequentially displayed on the display screen, as illustrated in Figure 5A to 5E. Each of the patterns comprises an illuminated circle at a specified "pattern distance" from the sensor, with the rest of the screen being black (i.e. providing minimal illumination). During the display of each pattern, the sensor 201 measures the light reflected from the surface.

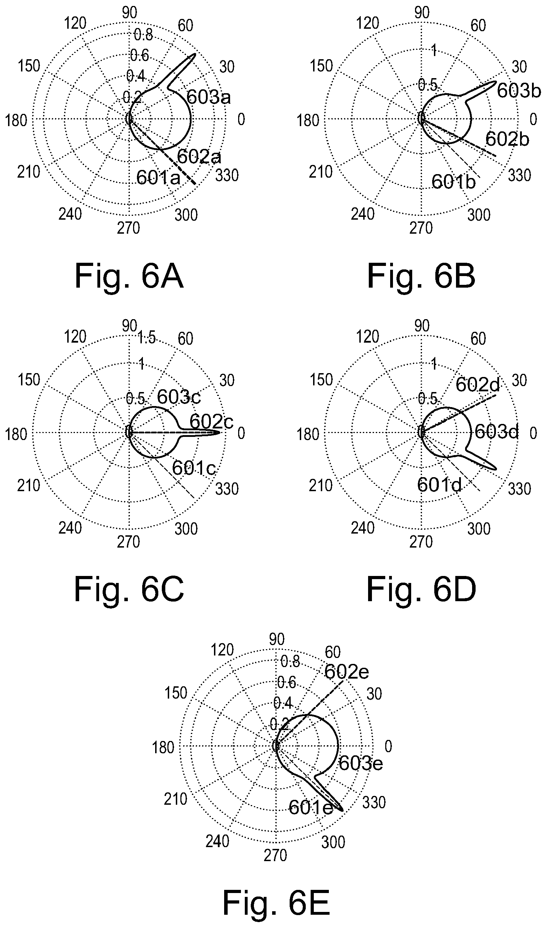

Example reflectance signals during display of each pattern are shown in Figures 6 A to 6E. In each figure, the sensor angle 601a-e and the illumination angle 602a-e are shown as dotted lines, and the intensity of the reflection 603 a-e is shown as a solid line. The value of the measured intensity is the intersection of the sensor angle 601a-e and the reflection intensity 603a-e.

Each of the measurements corresponds to a different measurement geometry, X°/Y°, where X is the illumination angle (the angle between a perpendicular to the surface at the target point, and a line connecting the target point to a representative point of the illuminated region of the display, e.g. a geometric midpoint of the pattern, and Y is the sensor angle e.g. the angle between a perpendicular to the surface and the target point, and a line connecting the target point to the sensor. Y may be fixed for a particular configuration of the device. X may be different for each of the displayed patterns.

In general the device (controller) does not have access to the value of X i.e. of the illumination angle from the pattern to the target point. However the controller 203 does have access to the location of the pattern on the display screen, e.g. because the controller is configured to control display of the pattern, and the measurements received by the detector, and may hence determine other properties of the system.

In step 403, the controller 203 determines the pattern distance corresponding to a maximum of the diffuse reflection of the pattern by the surface and/or a maximum of the specular reflection of the pattern by the surface. This is described in more detail below, with reference to Figure 7.

Figure 7 shows an example set of measurements for a sensor angle Y of 45 degrees, and a distance between the surface 300 and the display 201 of 40mm. The x-axis is distance in mm, and the y axis is sensor measurement strength in arbitrary units. The dots represent the individual sensor measurements. As can be seen in the figure, there are two local maxima among the measured points - at 40mm (701) and 80mm (702). The maximum 701 can be seen to form part of a smooth curve with most of the other points, and is closer to the sensor than the maximum 702 - as such, this maximum can be identified as the maximum associated with the diffuse reflection. The maximum 702 stands out from the other points (indicating that it is on a narrow peak), and is further from the sensor - as such, this maximum can be identified as the maximum associated with the specular reflection.

If a more precise measurement is desired, rather than the actual measurement which happened to come close to the pattern distances for which each reflection is maximised, then the exact maximum of the diffuse reflection can be determined by fitting a curve to the measured points (ignoring any outliers due to the specular reflection). In implementations this curve is approximately sinusoidal. The pattern distance for which the diffuse reflection is maximised corresponds to a Y°/0° geometry - i.e. a geometry in which the pattern is directly above the target point.

The exact maximum of the specular reflection is harder to determine by curve fitting (as there are likely to be few points close to the specular peak). However, the distance between the sensor and the pattern for the specular reflection is generally about twice the distance between the sensor and the pattern for the diffuse reflection (as specular reflection corresponds to a Y°/-Y° geometry), which allows the height of the peak to be estimated based on the known points.

If further accuracy or confirmation is required, then further patterns may be displayed with pattern distances at and close to the calculated values for the diffuse and specular maxima.

Knowledge of the emitted intensity from the display screen, the sensitivity of the sensor, and the maxima determined above allows the reflectance of the surface to be characterised: The positions of the maxima (plus the sensor angle) may be used to determine the distance between the display screen and the surface. This distance may then be used, in combination with the emitted intensity and the measured intensity, to determine the reflectance of the surface for specular reflection and for diffuse reflection, i.e. by comparing the intensity of light received at the sensor to the intensity that would have been received if the surface was a perfect reflector (which is a function of the intensity of the display and the distance travelled by the light).

While the above has considered effectively monochromatic measurement of reflection, similar methods can be used for color measurement. Color measurement is achieved by measuring diffuse reflection for a set of different colors and then mapping the results onto a color space. The set of measured colors may be defined, for example by a color e.g. wavelength of the emitted (illuminating) light, which may be varied; and/or by the spectral channels to which the optical sensor is sensitive.

The wavelength of emitted light may be varied by displaying the patterns on the display screen in at least two colors. Also or instead the optical sensor may be sensitive in at least 2, 3, 4 or more spectral channels, where each channel has a different sensitivity vs wavelength function. The results of the measurements can be transformed to produce a color measurement in a standard color space, or to produce an approximate color spectrum, by standard techniques as known in the art.

The transformation may be performed by a matrix operation, i.e. multiplying a vector representation of the measurements with a matrix representation of the transformation between the measurements and a color space, to obtain a vector representation of the color in that color space. The transformation matrix coefficients will relate to the spectrum of the illumination (i.e. the light emitted by the display screen) and the spectral sensitivity of the sensor. For a color space having w components, and a multi-spectral sensor having n channels, the transformation matrix will be an w x n matrix. Typical color spaces have three components, e.g. the XYZ color space, so where such a color space is used with an RGB sensor, the transformation matrix would be a 3x3 matrix. If a spectral reconstruction is desired, this may be treated as a color space having a large number of components (e.g. 380nm, 381nm, etc, up to 780nm), and the procedure is equivalent.

This transformation may use a preconfigured calibration in the controller, and/or suitable calculations may be performed by the controlled to determine the transformation. Such a calibration may be obtained theoretically, or by measuring surfaces with known color properties and determining the calibration experimentally; the calibration data may then be stored for use by the controller. The color space may be e.g. a CIE color space such as the CIE XYZ color space, or a color space based on the RGB model.

The intensity is measured for each pattern color, sensor channel, or combination of pattern colour and sensor channel, at a pattern distance corresponding to the maximum of diffuse reflection. This may be the maximum actually measured point, or may be an interpolation of the measured points to obtain the "true" maximum of diffuse reflection. The set of measured intensities at maximum diffuse reflection are then transformed to give a color measurement, e.g. in a standard color space, or an estimate of the reflectance spectrum of the surface.

The sensor may be e.g. any of: a three channel sensor (e.g. a sensor which provides direct output in a three-channel color space, such as an RGB or XYZ sensor); a camera chip, such as a CCD (to measure the correct region of the surface, the measurement may use only a subset of the pixels of the camera chip); a multi-spectral sensor; and a photodetector array, wherein the photodetectors in the array are configured to measure light in each of a plurality of spectral channels.

The display may be e.g. any of: an OLED display; a backlit liquid crystal display; and any other light emitting display e.g. which can display arbitrary patterns.

The transformation from the sensor measurements to the color may be based in part on a calibration based on the wavelength-dependent sensitivity of the sensor and/or the wavelength dependent intensity of light emitted by the display (i.e. the spectral characteristics of "white" as emitted by the display). Example wavelength dependent intensities for "white" on common display screens 800, 802, 804, 806 are shown in Figure 8.

An additional backlight compensation step may be performed. This may comprise taking measurements from the sensor when the device is in position but no pattern is displayed on the display screen (e.g. the screen is black), and subtracting these measurements from all other measurements made by the sensor.

The sensor angle may be 45 degrees (i.e. to give a measurement geometry which matches the generally used standards for color measurement), but other geometries may be used (e.g. to allow the method to be performed with a broader range of hardware).

The device may be provided as an integral unit (e.g. having the display and the sensor on the same unit, such as a smartphone with a front facing camera), or the sensor may be provided as a module to be attached to a second module comprising the display.

There are various possibilities for the pattern which is used to illuminate the target. The simplest is a circle as shown in Figures 5A to 5E, with the circles being of a consistent size, and located on a single line extending through the sensor, in this case, the midline of the display. The radius of the circles, or in general, the size of the illuminated area in each pattern, is a balance between the illumination of the surface, and how closely the illumination is to the ideal "point source"-like behaviour. Larger patterns give greater illumination; smaller patterns give results closer to a point source.

The use of illumination areas within the patterns with shapes other than circles can provide a better balance between these factors. Figures 9A and 9B show other options for the pattern; each shows all of the patterns at once, for convenience, although these are in practice displayed sequentially (as in Figures 5A to E). For example, if each pattern is a line 901 perpendicular to the line extending through the sensor, e.g. horizontal lines on the display, as shown in Figure 9A, then the total area of the pattern is larger for a given span of illumination angles of the pattern. The span of illumination angles is the difference between the illumination angle for the part of the pattern closest to the sensor, and the illumination angle for the part of the pattern furthest from the sensor. Further improvement in that regard can be obtained by defining the pattern to be an arc 902 centred on the sensor (as shown in Figure 9B), but in this case the pattern area is different depending on the pattern distance.

Additionally, by comparing the measurements received from patterns either side of a straight line passing through the sensor, the tilt of the device may be determined. If the device is parallel to the surface, then the measurements made by the sensor should be the same for a first pattern which is located at a first pattern distance from the sensor, and is located on the left side of a straight line passing through the sensor, and for a second pattern which is located at the same pattern distance but on the right side of the straight line passing through the sensor - where the straight line passing through the sensor passes directly over the target point. If the measurement is greater for the first pattern than for the second pattern, then this indicates that the left side of the device is closer to the surface than the right side, and vice versa. To obtain increased accuracy for this tilt measurement it may be performed at the pattern distance corresponding to the maximum specular reflection (as this will show the greatest change in measured intensity due to tilt), but this is not required.

While the controller has been described above as being integral with the device, this need not be the case. Figure 10 shows an alternative arrangement where the device 1000 comprises a display screen 1001 and a sensor 1002. A separate controller 1003 is connected to the device via a wired or wireless data connection 1004. For example, the device may be a peripheral which is connected to a computer which acts as the controller, As a further alternative (not illustrated), the role of the controller may be shared between a first controller on the device, and a second, external controller. For example, the second controller may be a cloud server which performs the determination of the color from the sensor measurements, with the control of the display being handled by a first controller on the device..

In general, a system of the present invention comprises a device (200, 1000) having a display screen (201, 1001) and a sensor (202, 1002), and also comprises a controller which may be a part of the device (203), external to the device (1003), or distributed between the device and other entities (not shown in figures).

The examples of the above disclosure can be employed in many different applications including paint or dye matching, color reproduction in computer generated imagery, or characterising materials, for example, in the paint industry, and other industries.

### List of reference numerals:

- 101: light source
- 102: point on surface 103
- 103: surface
- 104: detector
- 200: device
- 201: display screen
- 202: optical sensor
- 203: controller
- 300: surface
- 301: target spot on surface
- 310: field of view of sensor 202
- 320: patterns on display 201
- 401: first method step
- 402: second method step
- 403: third method step

In Figure 6, the reference numerals are followed by a letter from a to e, with each letter denoting the respective element in figures 6A to 6E respectively.
- 601a-e: sensor angle
- 602a-e: illumination angle
- 603a-e: intensity of reflection
- 701: peak measurement corresponding to diffuse reflection
- 702: peak measurement corresponding to specular reflection
- 800, 802, 804, 806: common display screens
- 901: pattern comprising line across display screen
- 902: pattern comprising arc on display screen, centered on sensor
- 1000: alternative device
- 1001: display screen
- 1002: optical sensor
- 1003: controller external to device 1000
- 1004: connection between controller 1003 and device 1000

The skilled person will understand that in the preceding description and appended claims, positional terms such as 'above', 'along', 'side', etc. are made with reference to conceptual illustrations, such as those shown in the appended drawings. These terms are used for ease of reference but are not intended to be of limiting nature. These terms are therefore to be understood as referring to an object when in an orientation as shown in the accompanying drawings.

Also, while "intensity" has generally been used as a measure of brightness of light, it will be appreciated that similar quantities (e.g. power, radiance, etc) may be used instead, as would be apparent to the person skilled in the art.

Although the disclosure has been described in terms of examples as set forth above, it should be understood that these are illustrative only and that the claims are not limited to those examples. Those skilled in the art will be able to make modifications and alternatives in view of the disclosure which are contemplated as falling within the scope of the appended claims. Each feature disclosed or illustrated in the present specification may be incorporated in any practical realisation of the concepts therein, whether alone or in any appropriate combination with any other feature disclosed or illustrated herein.

## Claims

1. A method of measuring the color of a surface (300), the method comprising:
positioning a device (200) above the surface (300), the device (200) comprising an optical sensor (202) and a display screen (201), wherein the optical sensor (202) measures visible light level in a plurality of spectral channels, each channel having different spectral sensitivity characteristics, the device (200) being positioned such that the sensor (202) measures light reflected from the surface (300);
sequentially displaying a plurality of patterns (320) on the display screen (201), each pattern (320) comprising an illuminated region at a different respective distance from the optical sensor (202);
measuring, using the optical sensor (202), light reflected by the surface (300) during display of each pattern (320);
determining a value of the distance from the optical sensor (202) to the illuminated region for a first local maximum of intensity of the measured light reflected by the surface (300) by using a sensor angle, the first local maximum being a maximum of the diffuse reflection of the pattern (320);
determining a location in a color space corresponding to a color of the surface (300) or a reflectance spectrum of the surface (300) based on the visible light level in each spectral channel for the value of the distance corresponding to the first local maximum.

2. A method according to claim 1, wherein the value of the distance corresponding to the first local maximum is determined for one of:
measurements from a single channel of the plurality of spectral channels;
an average of measurements from each channel of the plurality of spectral channels.

3. A method according to any preceding claim, wherein the illuminated region of each pattern (320) is white.

4. A method according to any preceding claim, wherein the plurality of patterns (320) comprises at least two groups of patterns (320), and wherein the illuminated region of each group of patterns (320) is displayed in a different color.

5. A method of measuring the color of a surface (300), the method comprising:
positioning a device (200) above the surface, the device comprising an optical sensor (202) and a display screen (201), wherein the optical sensor (202) measures visible light level, the device (200) being positioned such that the sensor (202) measures light reflected from the surface (300);
sequentially displaying a plurality of patterns (320) on the display screen (201), each pattern (320) comprising an illuminated region at a different respective distance from the optical sensor (202), wherein the plurality of patterns (320) comprises at least two groups of patterns (320), the illuminated region of each group of patterns (320) being displayed in a different color;
measuring, using the optical sensor (202), light reflected by the surface (300) during display of each pattern (320);
determining a value of the distance from the optical sensor (202) to the illuminated region for a first local maximum of intensity of the measured light reflected by the surface (300) by using a sensor angle, the first local maximum being a maximum of the diffuse reflection of the pattern (320);
determining a location in a color space corresponding to a color of the surface (300) or a reflectance spectrum of the surface (300) based on the visible light level for each group of patterns (320) for the value of the distance corresponding to the local maximum.

6. A method according to any preceding claim, wherein the first local maximum is a local maximum point of an curve of intensity against the value of the distance, such that the curve fits the measurements, and wherein the location in color space is determined by interpolating the measurements to obtain further measurements at the first local maximum.

7. A method according to any preceding claim, and comprising obtaining a background measurement by measuring, using the optical sensor (202), light reflected by the surface (300) when no pattern is displayed, and subtracting the background measurement for each other measurement of the sensor (202).

8. A method according to any preceding claim, wherein the optical sensor (202) is configured to measure light reflected at an angle of 45 degrees from the surface (300).

9. A method according to any preceding claim, wherein the sensor (202) is configured to measure visible light level in a plurality of spectral channels, and comprises any one or more of:
a photodetector array, the photodetector array comprising photodetectors being sensitive to each of the spectral channels;
a multi-spectral optical sensor;
a three channel color sensor;
a camera comprising a CCD or CMOS;
a camera comprising a CCD or CMOS, wherein only a subset of pixels of the CCD or CMOS are used to obtain the measurement.

10. A method according to any preceding claim, wherein the illuminated region of each pattern (320) is a disc against a black background.

11. A method according to any of claims 1 to 9, wherein the illuminated region of each pattern (320) is a straight line across the display screen, against a black background.

12. A method according to any of claims 1 to 9, wherein the illuminated region of each pattern (320) is an arc centered on the sensor (202), against a black background.

13. A method according to any preceding claim, and comprising determining a reflectance of the surface (300) based on a second local maximum of the reflected light, wherein the second local maximum corresponds to a value of the distance which is greater than the value of the distance of the first local maximum.

14. A method according to claim 13, and comprising determining a distance between the device (200) and the surface (300) based on the value of the distance corresponding to the first local maximum, and determining the reflectance of the surface (300) based on the distance between the device (200) and the surface (300) and the measurements made by the sensor at the pattern (320) distance corresponding to the second local maximum.

15. A method according to any preceding claim, wherein the plurality of patterns (320) consists of:
a first set of patterns, wherein each pattern in the first set is a translation of the other patterns in the first set along a straight line from the sensor;
a second set of patterns, wherein the second set of patterns are located either side of the straight line from the sensor;
using measurements of reflected light of the second set of patterns to determine a tilt of the device relative to the surface.

16. A system including
a device (200) comprising:
an optical sensor (202), which measures visible light level in a plurality of spectral channels, each channel having different spectral sensitivity characteristics; and
a display screen (201); and
a controller configured to:
cause the display screen (201) to sequentially display a plurality of patterns (320), each pattern (320) comprising an illuminated region at a different respective distance from the sensor (202);
receive measurements from the optical sensor (202) of light reflected by a surface (300) during display of each pattern (320);
determine a value of the distance from the optical sensor (202) to the illuminated region for a first local maximum of intensity of the measured light reflected by the surface (300) by using a sensor angle, the first local maximum being a maximum of the diffuse reflection of the pattern (320);
determine a location in a color space corresponding to a color of the surface (300) or a reflectance spectrum of the surface based on the visible light level in each spectral channel for the value of the distance corresponding to the first local maximum.

17. A computer program product, for use in a device (200) comprising an optical sensor (202) and a display screen (201) wherein the optical sensor (202) measures visible light level in a plurality of spectral channels, each channel having different spectral sensitivity characteristics, the computer program product comprising:
code for sequentially displaying a plurality of patterns on the display screen (201), each pattern (320) comprising an illuminated region at a different respective distance from the sensor (202);
code for measuring, using the optical sensor, light reflected by a surface (300) during display of each pattern (320);
code for determining the value of the distance from the optical sensor (202) to the illuminated region for a first local maximum of intensity of the measured light reflected by the surface (300) by using a sensor angle, the first local maximum being a maximum of the diffuse reflection of the pattern (320);
code for determining a location in a color space corresponding to a color of the surface (300) or a reflectance spectrum of the surface (300) based on the visible light level in each spectral channel for the value of the distance corresponding to the first local maximum.

18. A system including
a device (200) comprising:
an optical sensor (202); and
a display screen (201); and
a controller configured to:
cause the display screen to sequentially display a plurality of patterns (320), each pattern (320) comprising an illuminated region at a different respective distance from the sensor (202), wherein the plurality of patterns (320) comprises at least two groups of patterns, the illuminated region of each group of patterns being displayed in a different color;
receive measurements from the optical sensor (202) of light reflected by a surface (300) during display of each pattern (320);
determine a value of the distance from the optical sensor (202) to the illuminated region for a first local maximum of intensity of the measured light reflected by the surface (300) by using a sensor angle, the first local maximum being a maximum of the diffuse reflection of the pattern (320);
determine a location in a color space corresponding to a color of the surface or a reflectance spectrum of the surface (300) based on the visible light level for each group of patterns (320) for the value of the distance corresponding to the first local maximum.

19. A computer program product, for use in a device comprising an optical sensor (202) and a display, the computer program product comprising:
code for sequentially displaying a plurality of patterns on the display screen (201), each pattern (320) comprising an illuminated region at a different respective distance from the sensor (202), wherein the plurality of patterns (320) comprises at least two groups of patterns (320), the illuminated region of each group of patterns being displayed in a different color;
code for measuring, using the optical sensor (202), light reflected by a surface (300) during display of each pattern (320);
code for determining the value of the distance from the optical sensor (202) to the illuminated region for a first local maximum of intensity of the measured light reflected by the surface (300) by using a sensor angle, the first local maximum being a maximum of the diffuse reflection of the pattern (320);
code for determining a location in a color space corresponding to a color of the surface (300) or a reflectance spectrum of the surface (300) based on the visible light level for each group of patterns (320) for the value of the distance corresponding to the first local maximum.

## Patentansprüche

1. Verfahren zum Messen der Farbe einer Oberfläche (300), das Verfahren umfassend:
Positionieren einer Vorrichtung (200) über der Oberfläche (300), die Vorrichtung (200) umfassend einen optischen Sensor (202) und einen Anzeigebildschirm (201), wobei der optische Sensor (202) das Niveau des sichtbaren Lichts in einer Vielzahl von Spektralkanälen misst, wobei jeder Kanal verschiedene spektrale Empfindlichkeitscharakteristika aufweist, die Vorrichtung (200) derart positioniert ist, dass der Sensor (202) von der Oberfläche (300) reflektiertes Licht misst;
aufeinanderfolgendes Anzeigen einer Vielzahl von Mustern (320) auf dem Anzeigebildschirm (201), jedes Muster (320) umfassend eine beleuchtete Region in einer verschiedenen jeweiligen Distanz von dem optischen Sensor (202);
Messen, unter Verwendung des optischen Sensors (202), von durch die Oberfläche (300) reflektiertem Licht während der Anzeige jedes Musters (320);
Bestimmen eines Werts der Distanz von dem optischen Sensor (202) zu der beleuchteten Region für ein erstes lokales Intensitätsmaximum des gemessenen durch die Oberfläche (300) reflektierten Lichts unter Verwendung eines Sensorwinkels, wobei das erste lokale Maximum ein Maximum der diffusen Reflexion des Musters (320) ist;
Bestimmen eines Orts in einem Farbraum korrespondierend mit einer Farbe der Oberfläche (300) oder einem Reflexionsspektrum der Oberfläche (300) basierend auf dem Niveau des sichtbaren Lichts in jedem Spektralkanal für den Wert der Distanz korrespondierend mit dem ersten lokalen Maximum.

2. Verfahren nach Anspruch 1, wobei der Wert der Distanz korrespondierend mit dem ersten lokalen Maximum für eines von Folgendem bestimmt wird:
Messungen von einem einzelnen Kanal der Vielzahl von Spektralkanälen;
ein Durchschnitt von Messungen von jedem Kanal der Vielzahl von Spektralkanälen.

3. Verfahren nach einem der vorhergehenden Ansprüche, wobei die beleuchtete Region jedes Musters (320) weiß ist.

4. Verfahren nach einem der vorhergehenden Ansprüche, wobei die Vielzahl von Mustern (320) mindestens zwei Gruppen von Mustern (320) umfasst und wobei die beleuchtete Region jeder Gruppe von Mustern (320) in einer verschiedenen Farbe angezeigt wird.

5. Verfahren zum Messen der Farbe einer Oberfläche (300), das Verfahren umfassend:
Positionieren einer Vorrichtung (200) über der Oberfläche, die Vorrichtung umfassend einen optischen Sensor (202) und einen Anzeigebildschirm (201), wobei der optische Sensor (202) das Niveau des sichtbaren Lichts misst, die Vorrichtung (200) derart positioniert ist, dass der Sensor (202) von der Oberfläche (300) reflektiertes Licht misst;
aufeinanderfolgendes Anzeigen einer Vielzahl von Mustern (320) auf dem Anzeigebildschirm (201), jedes Muster (320) umfassend eine beleuchtete Region in einer verschiedenen jeweiligen Distanz von dem optischen Sensor (202), wobei die Vielzahl von Mustern (320) mindestens zwei Gruppen von Mustern (320) umfasst, die beleuchtete Region jeder Gruppe von Mustern (320) in einer verschiedenen Farbe angezeigt wird;
Messen, unter Verwendung des optischen Sensors (202), von durch die Oberfläche (300) reflektiertem Licht während der Anzeige jedes Musters (320);
Bestimmen eines Werts der Distanz von dem optischen Sensor (202) zu der beleuchteten Region für ein erstes lokales Intensitätsmaximum des gemessenen durch die Oberfläche (300) reflektierten Lichts unter Verwendung eines Sensorwinkels, wobei das erste lokale Maximum ein Maximum der diffusen Reflexion des Musters (320) ist;
Bestimmen eines Orts in einem Farbraum korrespondierend mit einer Farbe der Oberfläche (300) oder einem Reflexionsspektrum der Oberfläche (300) basierend auf dem Niveau des sichtbaren Lichts für jede Gruppe von Mustern (320) für den Wert der Distanz korrespondierend mit dem lokalen Maximum.

6. Verfahren nach einem der vorhergehenden Ansprüche, wobei das erste lokale Maximum ein lokaler Maximalpunkt einer Intensitätskurve gegen den Wert der Distanz ist, so dass die Kurven den Messungen entspricht, und wobei der Ort im Farbraum durch Interpolieren der Messungen bestimmt wird, um weitere Messungen an dem ersten lokalen Maximum zu erhalten.

7. Verfahren nach einem der vorhergehenden Ansprüche und umfassend Erhalten einer Hintergrundmessung durch Messen, unter Verwendung des optischen Sensors (202), von durch die Oberfläche (300) reflektiertem Licht, wenn kein Muster angezeigt wird, und Subtrahieren der Hintergrundmessung für jede andere Messung des Sensors (202).

8. Verfahren nach einem der vorhergehenden Ansprüche, wobei der optische Sensor (202) konfiguriert ist zum Messen von Licht, das in einem Winkel von 45 Grad von der Oberfläche (300) reflektiert wird.

9. Verfahren nach einem der vorhergehenden Ansprüche, wobei der Sensor (202) konfiguriert ist zum Messen des Niveaus des sichtbaren Lichts in einer Vielzahl von Spektralkanälen und eines oder mehrere von Folgendem umfasst:
eine Fotodetektoranordnung, die Fotodetektoranordnung umfassend Fotodetektoren, die für jeden der Spektralkanäle empfindlich sind;
einen multispektralen optischen Sensor;
eine Dreikanal-Farbsensor;
eine Kamera, umfassend eine CCD oder CMOS;
eine Kamera, umfassend eine CCD oder CMOS, wobei nur eine Teilmenge von Bildpunkten der CCD oder CMOS zum Erhalten der Messung verwendet werden.

10. Verfahren nach einem der vorhergehenden Ansprüche, wobei die beleuchtete Region jedes Musters (320) eine Scheibe gegen einen schwarzen Hintergrund ist.

11. Verfahren nach einem der Ansprüche 1 bis 9, wobei die beleuchtete Region jedes Musters (320) eine gerade Linie über den Anzeigebildschirm gegen einen schwarzen Hintergrund ist.

12. Verfahren nach einem der Ansprüche 1 bis 9, wobei die beleuchtete Region jedes Musters (320) ein auf den Sensor (202) zentrierter Bogen gegen einen schwarzen Hintergrund ist.

13. Verfahren nach einem der vorhergehenden Ansprüche und umfassend Bestimmen eines Reflexionsvermögens der Oberfläche (300) basierend auf einem zweiten lokalen Maximum des reflektierten Lichts, wobei das zweite lokale Maximum mit einem Wert der Distanz korrespondiert, der größer als der Wert der Distanz des ersten lokalen Maximums ist.

14. Verfahren nach Anspruch 13 und umfassend Bestimmen eine Distanz zwischen der Vorrichtung (200) und der Oberfläche (300) basierend auf dem Wert der Distanz korrespondierend mit dem ersten lokalen Maximum und Bestimmen des Reflexionsvermögens der Oberfläche (300) basierend auf der Distanz zwischen der Vorrichtung (200) und der Oberfläche (300) und den durch den Sensor vorgenommenen Messungen an der Distanz des Musters (320) korrespondierend mit dem zweiten lokalen Maximum.

15. Verfahren nach einem der vorhergehenden Ansprüche, wobei die Vielzahl von Mustern (320) aus Folgendem besteht:
eine erste Menge von Mustern, wobei jedes Muster in der ersten Menge eine Translation der anderen Muster in der ersten Menge entlang einer geraden Linie von dem Sensor ist;
eine zweite Menge von Mustern, wobei die zweite Menge von Mustern auf einer Seite der geraden Linie von dem Sensor angeordnet ist,
Verwenden von Messungen von reflektiertem Licht der zweiten Menge von Mustern, um eine Neigung der Vorrichtung relativ zu der Oberfläche zu bestimmen.

16. System, enthaltend
eine Vorrichtung (200), umfassend:
einen optischen Sensor (202), der das Niveau des sichtbaren Lichts in einer Vielzahl von Spektralkanälen misst, wobei jeder Kanal verschiedene spektrale Empfindlichkeitscharakteristika aufweist; und
eine Anzeigebildschirm (201); und
eine Steuerung, konfiguriert zum:
Veranlassen des Anzeigebildschirms (201) zum aufeinanderfolgenden Anzeigen einer Vielzahl von Mustern (320), jedes Muster (320) umfassend eine beleuchtete Region in einer verschiedenen jeweiligen Distanz von dem Sensor (202);
Empfangen von Messungen von dem optischen Sensor (202) von durch eine Oberfläche (300) reflektiertem Licht während der Anzeige jedes Musters (320);
Bestimmen eines Werts der Distanz von dem optischen Sensor (202) zu der beleuchteten Region für ein erstes lokales Intensitätsmaximum des gemessenen durch die Oberfläche (300) reflektierten Lichts unter Verwendung eines Sensorwinkels, wobei das erste lokale Maximum ein Maximum der diffusen Reflexion des Musters (320) ist;
Bestimmen eines Orts in einem Farbraum korrespondierend mit einer Farbe der Oberfläche (300) oder einem Reflexionsspektrum der Oberfläche basierend auf dem Niveau des sichtbaren Lichts in jedem Spektralkanal für den Wert der Distanz korrespondierend mit dem ersten lokalen Maximum.

17. Computerprogrammprodukt zur Verwendung in einer Vorrichtung (200), umfassend einen optischen Sensor (202) und einen Anzeigebildschirm (201), wobei der optische Sensor (202) das Niveau des sichtbaren Lichts in einer Vielzahl von Spektralkanälen misst, wobei jeder Kanal verschiedene spektrale Empfindlichkeitscharakteristika aufweist, das Computerprogrammprodukt umfassend;
Code zum aufeinanderfolgenden Anzeigen einer Vielzahl von Mustern auf dem Anzeigebildschirm (201), jedes Muster (320) umfassend eine beleuchtete Region in einer verschiedenen jeweiligen Distanz von dem Sensor (202);
Code zum Messen, unter Verwendung des optischen Sensors, von durch eine Oberfläche (300) reflektiertem Licht während der Anzeige jedes Musters (320);
Code zum Bestimmen des Werts der Distanz von dem optischen Sensor (202) zu der beleuchteten Region für ein erstes lokales Intensitätsmaximum des gemessenen durch die Oberfläche (300) reflektierten Lichts unter Verwendung eines Sensorwinkels, wobei das erste lokale Maximum ein Maximum der diffusen Reflexion des Musters (320) ist;
Code zum Bestimmen eines Orts in einem Farbraum korrespondierend mit einer Farbe der Oberfläche (300) oder einem Reflexionsspektrum der Oberfläche (300) basierend auf dem Niveau des sichtbaren Lichts in jedem Spektralkanal für den Wert der Distanz korrespondierend mit dem ersten lokalen Maximum.

18. System, enthaltend
eine Vorrichtung (200), umfassend:
einen optischen Sensor (202); und
einen Anzeigebildschirm (201); und
eine Steuerung, konfiguriert zum:
Veranlassen des Anzeigebildschirms zum aufeinanderfolgenden Anzeigen einer Vielzahl von Mustern (320), jedes Muster (320) umfassend eine beleuchtete Region in einer verschiedenen jeweiligen Distanz von dem Sensor (202), wobei die Vielzahl von Mustern (320) mindestens zwei Gruppen von Mustern umfasst, die beleuchtete Region jeder Gruppe von Mustern in einer verschiedenen Farbe angezeigt wird;
Empfangen von Messungen von dem optischen Sensor (202) von durch eine Oberfläche (300) reflektiertem Licht während der Anzeige jedes Musters (320);
Bestimmen eines Werts der Distanz von dem optischen Sensor (202) zu der beleuchteten Region für ein erstes lokales Intensitätsmaximum des gemessenen durch die Oberfläche (300) reflektierten Lichts unter Verwendung eines Sensorwinkels, wobei das erste lokale Maximum ein Maximum der diffusen Reflexion des Musters (320) ist;
Bestimmen eines Orts in einem Farbraum korrespondierend mit einer Farbe der Oberfläche oder einem Reflexionsspektrum der Oberfläche (300) basierend auf dem Niveau des sichtbaren Lichts für jede Gruppe von Mustern (320) für den Wert der Distanz korrespondierend mit dem ersten lokalen Maximum.

19. Computerprogrammprodukt zur Verwendung in einer Vorrichtung, umfassend einen optischen Sensor (202) und eine Anzeige, das Computerprogrammprodukt umfassend:
Code zum aufeinanderfolgenden Anzeigen einer Vielzahl von Mustern auf dem Anzeigebildschirm (201), jedes Muster (320) umfassend eine beleuchtete Region in einer verschiedenen jeweiligen Distanz von dem Sensor (202), wobei die Vielzahl von Mustern (320) mindestens zwei Gruppen von Mustern (320) umfasst, die beleuchtete Region jeder Gruppe von Mustern in einer verschiedenen Farbe angezeigt wird;
Code zum Messen, unter Verwendung des optischen Sensors (202), von durch eine Oberfläche (300) reflektiertem Licht während der Anzeige jedes Musters (320);
Code zum Bestimmen des Werts der Distanz von dem optischen Sensor (202) zu der beleuchteten Region für ein erstes lokales Intensitätsmaximum des gemessenen durch die Oberfläche (300) reflektierten Lichts unter Verwendung eines Sensorwinkels, wobei das erste lokale Maximum ein Maximum der diffusen Reflexion des Musters (320) ist;
Code zum Bestimmen eines Orts in einem Farbraum korrespondierend mit einer Farbe der Oberfläche (300) oder einem Reflexionsspektrum der Oberfläche (300) basierend auf dem Niveau des sichtbaren Lichts für jede Gruppe von Mustern (320) für den Wert der Distanz korrespondierend mit dem ersten lokalen Maximum.

## Revendications

1. Procédé de mesure de la couleur d'une surface (300), le procédé comprenant :
le positionnement d'un dispositif (200) au-dessus de la surface (300), le dispositif (200) comprenant un capteur optique (202) et un écran d'affichage (201), le capteur optique (202) mesurant un niveau de lumière visible dans une pluralité de canaux spectraux, chaque canal ayant des caractéristiques de sensibilité spectrale différentes, le dispositif (200) étant positionné de telle sorte que le capteur (202) mesure la lumière réfléchie depuis la surface (300) ;
l'affichage successif d'une pluralité de motifs (320) sur l'écran d'affichage (201), chaque motif (320) comprenant une région éclairée à une distance respective différente du capteur optique (202) ;
la mesure, au moyen du capteur optique (202), de la lumière réfléchie par la surface (300) pendant l'affichage de chaque motif (320) ;
la détermination d'une valeur de la distance allant du capteur optique (202) à la région éclairée pour un premier maximum local d'intensité de la lumière mesurée réfléchie par la surface (300) au moyen d'un angle de capteur, le premier maximum local étant un maximum de la réflexion diffuse du motif (320) ;
la détermination d'un emplacement dans un espace colorimétrique correspondant à une couleur de la surface (300) ou d'un spectre de réflectance de la surface (300) sur la base du niveau de lumière visible dans chaque canal spectral pour la valeur de la distance correspondant au premier maximum local.

2. Procédé selon la revendication 1, dans lequel la valeur de la distance correspondant au premier maximum local est déterminée soit pour :
des mesures à partir d'un canal individuel de la pluralité de canaux spectraux ; soit pour
une moyenne de mesures à partir de chaque canal de la pluralité de canaux spectraux.

3. Procédé selon une quelconque revendication précédente, dans lequel la région éclairée de chaque motif (320) est blanche.

4. Procédé selon une quelconque revendication précédente, dans lequel la pluralité de motifs (320) comprend au moins deux groupes de motifs (320), et dans lequel la région éclairée de chaque groupe de motifs (320) est affichée dans une couleur différente.

5. Procédé de mesure de la couleur d'une surface (300), le procédé comprenant :
le positionnement d'un dispositif (200) au-dessus de la surface, le dispositif comprenant un capteur optique (202) et un écran d'affichage (201), le capteur optique (202) mesurant un niveau de lumière visible, le dispositif (200) étant positionné de telle sorte que le capteur (202) mesure la lumière réfléchie depuis la surface (300) ;
l'affichage successif d'une pluralité de motifs (320) sur l'écran d'affichage (201), chaque motif (320) comprenant une région éclairée à une distance respective différente du capteur optique (202), la pluralité de motifs (320) comprenant au moins deux groupes de motifs (320), la région éclairée de chaque groupe de motifs (320) étant affichée dans une couleur différente ;
la mesure, au moyen du capteur optique (202), de la lumière réfléchie par la surface (300) pendant l'affichage de chaque motif (320) ;
la détermination d'une valeur de la distance allant du capteur optique (202) à la région éclairée pour un premier maximum local d'intensité de la lumière mesurée réfléchie par la surface (300) au moyen d'un angle de capteur, le premier maximum local étant un maximum de la réflexion diffuse du motif (320) ;
la détermination d'un emplacement dans un espace colorimétrique correspondant à une couleur de la surface (300) ou d'un spectre de réflectance de la surface (300) sur la base du niveau de lumière visible pour chaque groupe de motifs (320) pour la valeur de la distance correspondant au premier maximum local.

6. Procédé selon une quelconque revendication précédente, dans lequel le premier maximum local est un point maximum local d'une courbe de l'intensité en fonction de la valeur de la distance, de telle sorte que la courbe s'ajuste aux mesures, et dans lequel l'emplacement dans l'espace colorimétrique est déterminé par interpolation des mesures pour obtenir d'autres mesures au premier maximum local.

7. Procédé selon une quelconque revendication précédente, et comprenant l'obtention d'une mesure de fond par mesure, au moyen du capteur optique (202), de la lumière réfléchie par la surface (300) quand aucun motif n'est affiché, et la soustraction de la mesure de fond pour chaque autre mesure du capteur (202).

8. Procédé selon une quelconque revendication précédente, dans lequel le capteur optique (202) est configuré pour mesurer la lumière réfléchie à un angle de 45 degrés depuis la surface (300).

9. Procédé selon une quelconque revendication précédente, dans lequel le capteur (202) est configuré pour mesurer le niveau de lumière visible dans une pluralité de canaux spectraux, et comprend un ou plusieurs éléments, quels qu'ils soient, parmi :
un réseau de photodétecteurs, le réseau de photodétecteurs comprenant des photodétecteurs qui sont sensibles à chacun des canaux spectraux ;
un capteur optique multispectral ;
un capteur de couleur à trois canaux ;
une caméra comprenant un CCD ou CMOS ;
une caméra comprenant un CCD ou CMOS, dans laquelle seul un sous-ensemble de pixels du CCD ou CMOS est utilisé pour obtenir la mesure.

10. Procédé selon une quelconque revendication précédente, dans lequel la région éclairée de chaque motif (320) est un disque sur un fond noir.

11. Procédé selon l'une quelconque des revendications 1 à 9, dans lequel la région éclairée de chaque motif (320) est une ligne droite à travers l'écran d'affichage, sur un fond noir.

12. Procédé selon l'une quelconque des revendications 1 à 9, dans lequel la région éclairée de chaque motif (320) est un arc centré sur le capteur (202), sur un fond noir.

13. Procédé selon une quelconque revendication précédente, et comprenant la détermination d'une réflectance de la surface (300) sur la base d'un deuxième maximum local de la lumière réfléchie, le deuxième maximum local correspondant à une valeur de la distance qui est supérieure à la valeur de la distance du premier maximum local.

14. Procédé selon la revendication 13, et comprenant la détermination d'une distance entre le dispositif (200) et la surface (300) sur la base de la valeur de la distance correspondant au premier maximum local, et la détermination de la réflectance de la surface (300) sur la base de la distance entre le dispositif (200) et la surface (300) et des mesures faites par le capteur à la distance du motif (320) correspondant au deuxième maximum local.

15. Procédé selon une quelconque revendication précédente, dans lequel la pluralité de motifs (320) consiste en :
un premier ensemble de motifs, chaque motif dans le premier ensemble étant une translation des autres motifs dans le premier ensemble le long d'une ligne droite partant du capteur ;
un deuxième ensemble de motifs, le deuxième ensemble de motifs étant situé de chaque côté de la ligne droite partant du capteur ;
l'utilisation de mesures de la lumière réfléchie du deuxième ensemble de motifs pour déterminer une inclinaison du dispositif par rapport à la surface.

16. Système comportant
un dispositif (200) comprenant :
un capteur optique (202), qui mesure un niveau de lumière visible dans une pluralité de canaux spectraux, chaque canal ayant des caractéristiques de sensibilité spectrale différentes ; et
un écran d'affichage (201) ; et
un contrôleur configuré pour :
conduire l'écran d'affichage (201) à afficher successivement une pluralité de motifs (320), chaque motif (320) comprenant une région éclairée à une distance respective différente du capteur (202) ;
recevoir depuis le capteur optique (202) des mesures de la lumière réfléchie par une surface (300) pendant l'affichage de chaque motif (320) ;
déterminer une valeur de la distance allant du capteur optique (202) à la région éclairée pour un premier maximum local d'intensité de la lumière mesurée réfléchie par la surface (300) au moyen d'un angle de capteur, le premier maximum local étant un maximum de la réflexion diffuse du motif (320) ;
déterminer un emplacement dans un espace colorimétrique correspondant à une couleur de la surface (300) ou un spectre de réflectance de la surface sur la base du niveau de lumière visible dans chaque canal spectral pour la valeur de la distance correspondant au premier maximum local.

17. Produit-programme informatique, à utiliser dans un dispositif (200) comprenant un capteur optique (202) et un écran d'affichage (201) dans lequel le capteur optique (202) mesure un niveau de lumière visible dans une pluralité de canaux spectraux, chaque canal ayant des caractéristiques de sensibilité spectrale différentes, le produit-programme informatique comprenant :
un code pour afficher successivement une pluralité de motifs (320) sur l'écran d'affichage (201), chaque motif (320) comprenant une région éclairée à une distance respective différente du capteur (202) ;
un code pour mesurer, au moyen du capteur optique, la lumière réfléchie par une surface (300) pendant l'affichage de chaque motif (320) ;
un code pour déterminer la valeur de la distance allant du capteur optique (202) à la région éclairée pour un premier maximum local d'intensité de la lumière mesurée réfléchie par la surface (300) au moyen d'un angle de capteur, le premier maximum local étant un maximum de la réflexion diffuse du motif (320) ;
un code pour déterminer un emplacement dans un espace colorimétrique correspondant à une couleur de la surface (300) ou un spectre de réflectance de la surface (300) sur la base du niveau de lumière visible dans chaque canal spectral pour la valeur de la distance correspondant au premier maximum local.

18. Système comportant
un dispositif (200) comprenant :
un capteur optique (202) ; et
un écran d'affichage (201) ; et
un contrôleur configuré pour :
conduire l'écran d'affichage à afficher successivement une pluralité de motifs (320), chaque motif (320) comprenant une région éclairée à une distance respective différente du capteur (202), la pluralité de motifs (320) comprenant au moins deux groupes de motifs, la région éclairée de chaque groupe de motifs étant affichée dans une couleur différente ;
recevoir depuis le capteur optique (202) des mesures de la lumière réfléchie par une surface (300) pendant l'affichage de chaque motif (320) ;
déterminer une valeur de la distance allant du capteur optique (202) à la région éclairée pour un premier maximum local d'intensité de la lumière mesurée réfléchie par la surface (300) au moyen d'un angle de capteur, le premier maximum local étant un maximum de la réflexion diffuse du motif (320) ;
déterminer un emplacement dans un espace colorimétrique correspondant à une couleur de la surface ou un spectre de réflectance de la surface (300) sur la base du niveau de lumière visible pour chaque groupe de motifs (320) pour la valeur de la distance correspondant au premier maximum local.

19. Produit-programme informatique, à utiliser dans un dispositif comprenant un capteur optique (202) et un écran, le produit-programme informatique comprenant :
un code pour afficher successivement une pluralité de motifs sur l'écran d'affichage (201), chaque motif (320) comprenant une région éclairée à une distance respective différente du capteur (202), la pluralité de motifs (320) comprenant au moins deux groupes de motifs (320), la région éclairée de chaque groupe de motifs étant affichée dans une couleur différente ;
un code pour mesurer, au moyen du capteur optique (202), la lumière réfléchie par une surface (300) pendant l'affichage de chaque motif (320) ;
un code pour déterminer la valeur de la distance allant du capteur optique (202) à la région éclairée pour un premier maximum local d'intensité de la lumière mesurée réfléchie par la surface (300) au moyen d'un angle de capteur, le premier maximum local étant un maximum de la réflexion diffuse du motif (320) ;
un code pour déterminer un emplacement dans un espace colorimétrique correspondant à une couleur de la surface (300) ou un spectre de réflectance de la surface (300) sur la base du niveau de lumière visible pour chaque groupe de motifs (320) pour la valeur de la distance correspondant au premier maximum local.
